Europäisches Patentamt

European Patent Office

Office européen des brevets

(11) Publication number: **0 000 433**
**A1**

(12) **EUROPEAN PATENT APPLICATION**

(21) Application number: 78300121.7

(51) Int. Cl.²: **C10G11/18**

(22) Date of filing: 06.07.78

(30) Priority: 12.07.77 US 814941

(43) Date of publication of application: 24.01.79 Bulletin 79/2

(84) Designated Contracting States: DE GB NL

(71) Applicant: **MOBIL OIL CORPORATION, 150 East 42nd Street, New York New York 10017 (US)**

(72) Inventor: **Davis, Francis Earle, 931 Elfwood Court, Woodbury, New Jersey (US)**

(74) Representative: **Jones, Alan John, CARPMAELS & RANSFORD Chartered Patent Agents 43 Bloomsbury Square, London, WC1A 2RA (GB)**

(54) **A process for fluid catalytic cracking of hydrocarbon feed.**

(57) A fluid catalytic cracking unit having a riser reactors is equipped with multiple nozzles for introducing the cracking feed into the riser. The unit is operated with preheat of the feed to at least 475° F whereby the efficiency of gasoline production is enhanced.

The amount of hot regenerated catalyst dispersed in the cracking feed is controlled to maintain a predetermined temperature at a predetermined point in the reactor.

EP 0 000 433 A1

- 1 -

## A PROCESS FOR FLUID CATALYTIC CRACKING OF HYDROCARBON FEED.

This invention relates to an improved method for operation of a fluid catalytic cracking system having a plurality of nozzles for injection of charge to a riser type reactor. More specifically, the present invention contemplate a high degree of preheat of the oil feed introduced to a riser reactor by multiple injection nozzles.

Fluid catalytic cracking of petroleum fractions is a well-established refinery operation. The catalytic cracking apparatus per se comprises a catalyst section which is subdivided into a reactor section whee catalytic cracking occurs, coupled with a regenerator section where coke deposited on spent catalyst is burned. The process operates essentially as follows. Fresh feed, which may be preheated, is mixed with catalyst and undergoes cracking within the reactor section. Products are removed from the reactor in the vapor phase and passed to a products recovery section comprising at least one main fractionator or distillation column for separation of the products into desired fractions. Spent catalyst, which has been coked by the cracking reaction, is continuously passed from the reactor to the regenerator by a spent catalyst transfer line. In the regenerator, the coke is burned by contact with an oxygen containing gas. Flue gas is passed from the regenerator, and regenerated catalyst is recirculated to the reactor via a standpipe where it is picked up by the fresh feed hydrocarbon charge stream. The catalyst itself is finely divided and simulates a fluid in various portions of the catalyst section, whence the name of the process. In a typical operation, heat generated in the regenerator is carried by the hot regenerated catalyst to the reactor to supply head for the endothermic cracking reaction. Typical fluid catalyst cracking systems are disclosed in U.S. Patent Nos.3,206,393 and 3,261,777.

The fluid catalytic cracking process has been improved in efficiency over the years. In particular, the discovery of zeolite catalysts with their greater activity and reduced coke make, and improvements in design of the reactor section to emphasize riser-cracking, are cases in point.

More recently it has been proposed that the charge be injected to a riser reactor through a plurality of nozzles as described in U.S.Patent Nos.3,152,065 and 3,246,960.Such multiple injection nozzles are provided with the intent to obtain more uniform and immediate dispersion of catalyst in the charge and thus afford in large scale equipment results like those given by small scale pilot plants.

It has now been found that the effect of multiple injection nozzles in commercial scale FCC riser reactors is not simply a matter of improved contact between charge and catalyst nor simply a function of improved uniformity of the dispersion of FCC catalyst in the charge. The effects from supplying an increased amount of the endothermic heat of cracking by increased preheat of the charge run counter to phenomena not previously recognized in the art or may be due to some other factor not now recognizable.

Plants for practice of FCC riser cracking are typically controlled by setting the desired temperature for the top of the reactor. A sensor detects temperature at that point and adjusts recycle of hot catalyst from the regenerator to maintain actual conditions at the set point. Thus as reactor top temperature tends to rise, as by increase in feed preheat, the control moves the catalyst recycle valve towards closed position thus reducing hot catalyst supply to the riser. As will be immediately apparent, this action reduces the catalyst/oil ratio in the reactor and has the expected result or reducing conversion of the charge. Past experience has been a consequent reduction in yield of gasoline based on charge.

Unexpectedly, a commercial riser FCC using multiple injection nozzles is found to follow the usual course of reduced conversion at decreased catalyst/oil on increaing feed preheat over a part of the range described, but at higher gasoline selectivity than expected. This improved gasoline selectivity is accompanied by reduction in octane number of the product, conforming to past experience that, at constant charge and catalyst, increase in gasoline yield is at the expense of lower octane number.

The unusual effect of increased gasoline yield at decreased conversion provides means for optimizing gasoline yield and octane number. According to the present invention, gasoline yield is enhanced by increasing preheat of the feed to multiple injection nozzles. Alternatively, octane number may be enhanced by reducing feed preheat in such systems.

The present method for obtaining increased gasoline yield at reduced conversion is described hereinafter with reference to the annexed drawings wherein:

Fig.1 is a schematic representation of a control system for a riser type FCC Unit;

Fig.2 is a diagrammatic sketch in elevation of a riser conversion zone terminating in an enlarged catalyst separation zone provided with cyclonic separating means, catalyst stripping and conduit means for passing catalyst to the bottom of the riser and for withdrawing from the stripping zone;

Fig.3 is a diagrammatic sketch of the bottom portion of the riser conversion zone with pipe means for contacting reactant fed with catalyst particles;

Fig.4 is a cross-sectional view of the pipe nozzle arrangement shown in elevation in Fig.2; and

Fig. 5 is a graph depicting the effect of number of nozzles on the average catalyst concentration in the riser cross-section at a predetermined level.

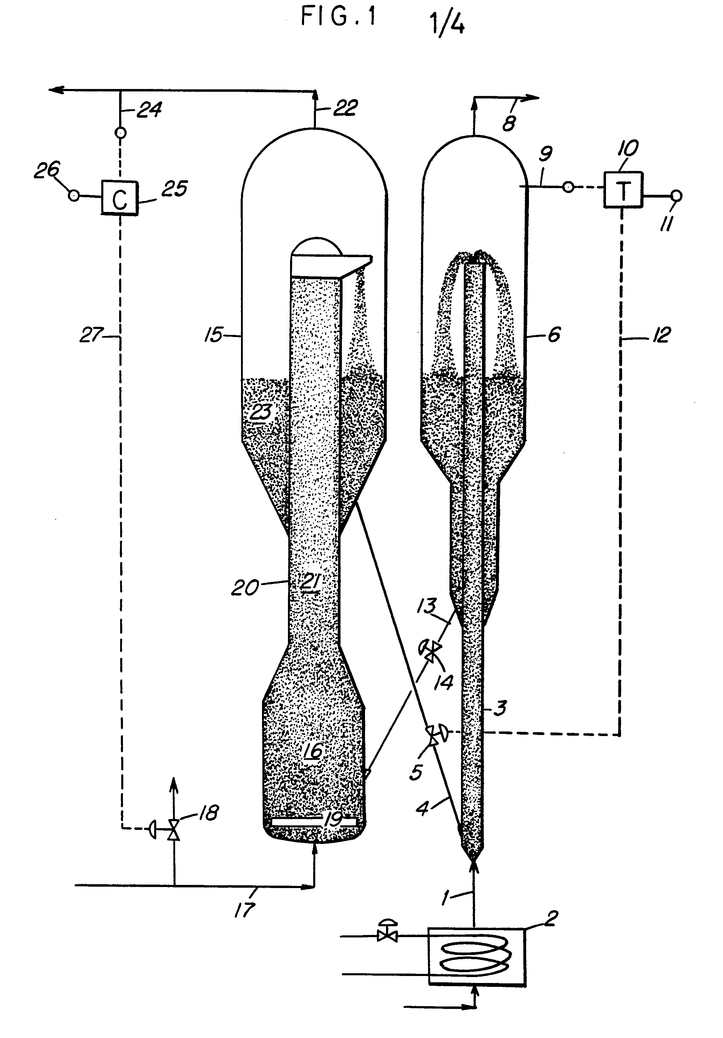

A conventional control scheme for a riser reactor FCC Unit is illustrated in Fig. 1. In Fig. 1 the oil feed, which may be preheated by the heater 2 is passed via line 1 to the lower end of riser pipe 3. Heated catalyst from a stand-pipe 4 having a control valve 5 is combined with the heated oil in the riser 3 such that an oil-catalyst mixture rises in an ascending dispersed stream until it is discharged into reactor 6 wherein catalyst is separated as a dense bed 7. In the reactor 6, thee may be other fluidized contacting between oil and the catalyst particles within the relatively dense fluidized bed 7. Generally, a major portion of the necessary cracking and contact of the oil with the catalyst takes place in riser 3. Any catalyst particles remaining suspended in the vaporous cracked reaction products are separated at the upper end of reactor 6 by centrifugal or setler type means (not shown in Fig.1). Products are then transferred overhead via line 8 to a products recovery section (not shown) which includes at least one fractionator. A temperature sensing means 9, such as a thermocouple, is provided to sense the temperature within reactor 6 and to provide a signal to the temperature controller 10 indicative of the temperature at the top of the reactor 6. When the temperature of the reactor deviates from the predetermined temperature defined by the set point 11 of the temperature controller 10, the temperature controller places a signal on a line 12 to adjust the valve 5 and thus adjust the temperature of the catalyst oil mixture in riser 3 in a direction to reduce the deviation of the measured temperature from the predetermined temperature as defined by the set point 11 of the controller 10. Generally, it is highly desirable to minimize fluctuations of the temperature within reactor 6 and of the products issuing from line 8 so as to minimize disturbances in the main fractionator column. Spent catalyst from the bed 7 is continuously passed from reactor 6 by spent catalyst transfer line 13 equipped with a valve 14, and is passed to the lower portion of the regenerator 15 to form a relatively dense bed 16. Air is passed via air transfer line 17 equipped with a control valve 18 to the regenerator 15, where it passes through distributor grid 19 and serves to maintain bed 16 in a fluidized state and to pass catalyst continuously through the riser 20 as a dilute phase 21. In the upper portion of the regenerator 15 flue gas is separated from regenerated catalyst, and exists via line 22. Regenerated catalyst is separated to form a relatively dense bed 23. The regeneratd catalyst bed 23 is at a substantially higher temperature than the spent catalyst from bed 7 by virtue of the coke burning which occurs in the regenerator 15. Within the regenerator itself, bed 23 and the flue gas in the chamber are substantially hotter than the spent but partially regenerated catalyst of bed 16. A composition sensor 24, which indicates the carbon monoxide and oxygen content of the flue gas, generates a signal indicative of that composition. Valve 18 is commonly controlled by operator intervention to control the flow of air and thus the CO and oxygen content of the flue gas. Alternatively, the signal generated by composition sensor 24 is transmitted to the composition controller 25. Controller 25, equipped with set points 26, places a signal on line 27, which signal is indicative of the deviation of the carbon monoxide composition of the flue gas from the set point 26, to adjust the control valve 18 in a direction to reduce the deviation of the measured composition from the predetermined composition as defined by the set point 26. In general, the set point is adjusted to a CO content less than 2000 ppm and the flue gas, in general, will contain about 2% excess oxygen gas. Although not explicitly shown, valve 14 is usually coupled with valve 5 in such a manner as to maintain a fixed ratio of amount of catalyst in the regenerator 15 to amount of catalyst in the reactor 6.

The present invention relates to the catalytic conversion of hydrocarbons with finely divided particles of catalyst. More particularly, the present invention is concerned with the conversion of hydrocarbons in a riser conversion zone under conditions promoting a more uniform mixing between hydrocarbon reactant and finely divided catalyst particles. In a more particular aspect the present invention is particularly concerned with the manner relied upon for injecting hydrocarbon feed into a stream of catalyst particles to form a suspension in a riser conversion zone.

The catalytic cracking of hydrocarbons, such as a gas oil hydrocarbon feed material is practised at a temperature within the range of 900°F. up to about 1200°F. with the temperature more usually restricted to less than 1100°F. Operating pressures within the range of atmospheric up to 100 psig may be employed, it being preferred to select conditions assuring good catalyst circulation, product and reactant flow which will contribute to the overall economics of the operation. In a riser conversion operation the hydrocarbon reactant is mixed with hot catalyst particles in the bottom of lower portion of the riser to form a suspension at a desired cracking temperature and the suspension is passed through the riser conversion zone under space velocity conditions providing a hydrocarbon residence time in the riser within the range of 1 to 15 seconds and more usually less than about 10 seconds. The suspension is discharged from the riser outlet into cyclonic separation zones or the suspension may be discharged from the riser into an enlarged zone wherein separation of catalyst particles from gasiform material such as hydrocarbon vapors is accomplished by a reduction in velocity thereby causing the catalyst particles to settle out. Cyclonic separating means may also be relied upon to remove particles of catalyst from vaporous material not removed by the reduced velocity. The hydrocarbon vapors are recovered and separated in a product fractionator. The catalyst particles are stripped to remove entrained hydrocarbons and the stripped catalyst may be passed to catalyst regeneration.

In the operating concept of this invention it is proposed to inject the hydrocarbon reactant feed to be cracked through a plurality of upwardly extending pipe nozzles in the lower portion of the riser conversion zone. The upper ends of the pipe nozzles are preferably at least above the point of intersection of the upper surface portion of the catalyst standpipe with that of the riser conversion zone. In one arrangement the number and position of the pipe nozzles with respect to one another is such that each nozzle is related to substantially an equal cross-sectional area of the riser conversion zone. In such an arrangement, there are at least five nozzles distributed in the cross-sectional area of the riser and preferably there are t least 7 nozzles distributed in the riser cross-section. In yet another embodiment, it is desirable to locate a majority of the pipe nozzles in a ring about a concentrically positioned pipe nozzle within the riser cross-sectional area with the area of the ring being concentrically located and encompassing at least 65% of the riser cross section. Thus in a particularly preferred embodiment there are at least seven pipe nozzles terminating from a single oil feed inlet conduit, at least 6 of the pipe nozzles form a ring spaced inwardly from the riser wall with the seventh concentrically located there within and the ring comprising the six nozzles will occupy an area which is at least 70% of the riser cross-sectional area.

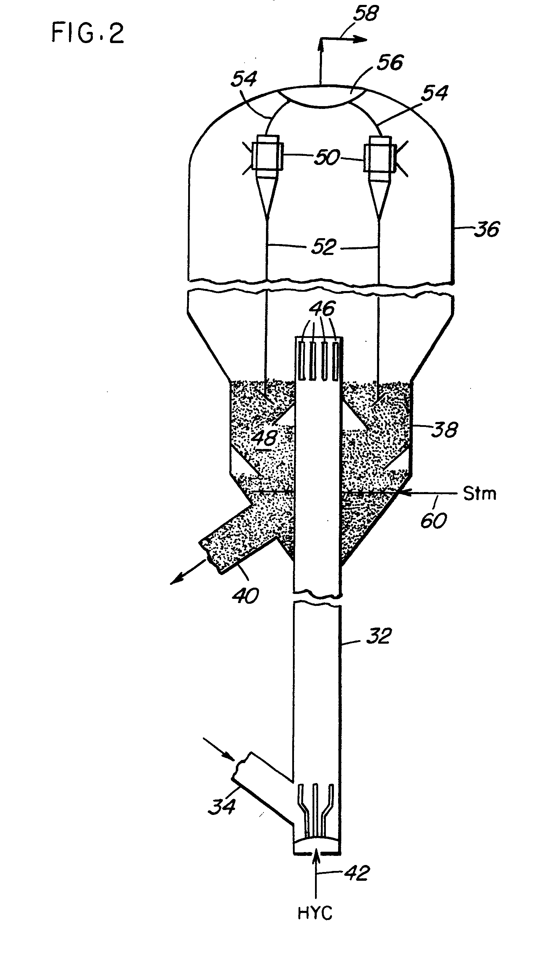

Referring now to Fig. 2, there is shown diagramatically a riser conversion zone 32, conduit means 34 for introducing catalyst to the bottom lower portion of riser 32, a separation zone 36 provided with a catalyst stripping zone 38 in the lower portion theeof and spent catalyst withdrawal conduit 40. Hydrocarbon feed introduced to the bottom of the riser 32 by conduit 42 is caused to pass upwardly through a plurality of distributing pipes 44 open at their upper end to form nozzles for dispersing hydrocarbon feed in contact with catalyst charged to the bottom of the riser by conduit 34 at an elevated cracking temperature of at least 900°F. A suspension is formed with the dispersed and vaporized oil and catalyst which is then moved under selected velocity conditions upwardly through the riser. In the arrangement of Fig. 2, the suspension passing upwardly through the riser is discharged through slotted openings 46 in the upper extreme periphery of the riser 32 and into the enlarged separation zone above a dense fluid bed of catalyst 48. Vaporous products of conversion and stripping stream pass through cyclonic separators 50 provided with catalyst diplegs 52. In separator 50, entrained catalyst particles are separated from vaporous material for return by dipleg 52 to bed 48. Separated vaporous material pass through conduits 54 to chamber 56 for withdrawal by conduit 58. Stripping gas such as steam is introduced to the bottom of bed 38 by conduit 60 and stripped catalyst is removed therefrom by conduit 40 for transfer to a catalyst regeneration zone shown in Fig.1.

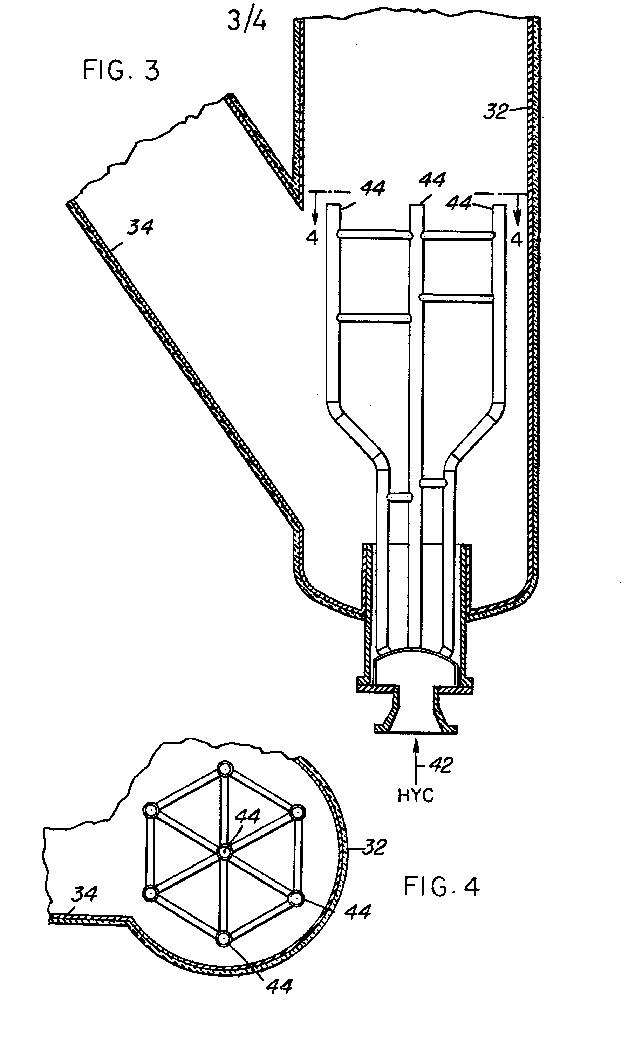

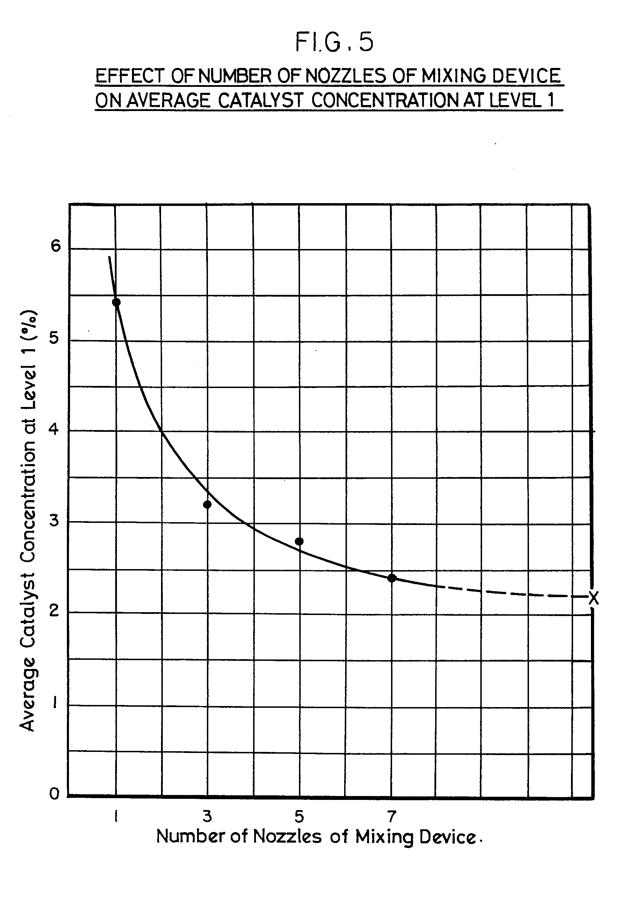

Fig.3 shows in greater detail the bottom portion of riser 32 and the multiple pipe inlet for injecting hydrocarbon feed into regenerated catalyst to form a suspension therewith for passage upwardly through riser 32. Fig.4, on the other hand, shows a cross-sectional view 4-4 of the pipe arrangement of Fig. 3 with open end nozzles for injecting hydrocarbon feed into the catalyst. The circle of pipes 44 preferably identify a cross-sectional area of the riser which is at least 70% of the riser cross-sectional area. Such an arrangement has been found to provide a more uniform catalyst density profile across the riser cross section than 5 or less feed injection pipes as depicted by the curve of Fig. 5. The graph of Fig. 5 shows the improved catalyst density profile obtained by use of a multiple pipe nozzle arrangement such as shown in Figs. 3 and 4. Level 1 referred to in the graph relates to measurements taken about 4 feet above the outlet of the pipe nozzles. It is clear from the graph that the seven pipe feed inlet device is better than a five and each of these are much better than a 1 or 3 pipe nozzle inlet arrangement.

The effect of the multi-nozzle injection device and response of a unit so equipped have been confirmed by surveys conducted on a commercial FCC Unit having a seven nozzle injection conforming to that shown in Figs. 2 - 4. In commercial practice it becomes highly impractical to operate at different times with precisely the same charge stock and catalyst, because the character of the catalyst changes with time on stream and differences in batches of catalyst added for make-up and because the crude available to a refinery changes at very short intervals. It thus becomes necessary to adjust raw survey data to compensate for differences in charge stock and catalyst. The data here reported have been so adjusted by application of factors equal to differences predicted by a mathematical mode based on pilot plant and commercial data. The conclusions stated are predicted on that adjusted data.

The surveys have demonstrated that the seven nozzle mixer increased gasoline yield by 2.1 volume percent and decreased Research Octane Number without lead by 1.1 at equal conversion. Pertinent changes in operation attributed to the multi-nozzle device, adjusted for feed and catalyst differences, are as follows:

| | |
|---|---|
| $C_5^+$ Gasoline, vol.% | +2.1 |
| $C_3$ + $C_4$, vol.% | -1.4 |
| Dry Gas ($C_2-$), wt.% | -0.5 |
| Coke, wt.% | +0.3 |
| Gasoline Efficiency | +3.0 |
| Octane (R + O) | -1.1 |

Three surveys of the commercial unit equipped with seven nozzle injector have been conducted to evaluate the effect of feed preheat.

A comparison of the survey results, adjusted to the same feedstock, catalyst, and operating conditions except for feed preheat temperature, is shown below:

| Preheat Temperature: | 265°F. | 374°F. | 514°F. |
|---|---|---|---|
| Conversion,vol% | 70.8 | 72.3 | 69.2 |
| Gasoline,vol% | 52.3 | 56.0 | 55.5 |
| Gasoline selectivity, vol% | 73.9 | 77.5 | 80.2 |
| Cat-to-oil ratio | 9.8 | 7.4 | 6.9 |

Although the differences in gasoline selectivity shown in the above table for the three surveys are primarily due to the effect of feed preheat temperature, some of these differences can also be attributed to variations among the surveys in conversion level, and the level of carbon on regenerated catalyst which also affect gasoline selectivity. The effect of conversion can be accounted for by plotting the gasoline yields for the three surveys versus conversion and then drawing a line through each point representing the typical gasoline yield versus conversion slope for the Unit. Even after adjusting for conversion level, higher gasoline selectivity is obtained at the higher feed preheat temperature.

However, a better method of determining the inherent effect of feed preheat temperature on gasoline selectivity , which accounts for the level of carbon on regenerated catalyst, as well as conversion level, is simply to compare the gasoline yield tuning factors used in a mathematical model simulation of the actual surveys. For example, in simulating each survey with a model, predicted gasoline yields had to be "tuned" donward to match the actual survey yields. The resulting adjustment ("gasoline delta") represents the deviation of the actual selectivity observed in the survey from the inherent selectivity predicted by the model for that particular operation. (Generally, the untuned model selectivity is greater than that observed in commercial units because the reaction kinetics in the model are based on data from highly efficient pilot units.) A comparison of the "gasoline delta" adjustments for the three surveys shows that observed selectivity deviates most from inherent model selectivity in the low preheat temperature case and least at the highest feed preheat. The increase in selectivity is greater from 260°F. to 400°F. and appears to level out between 400°F. and 500°F. This indicates that the commercial unit's gasoline selectivity not only increases as feed preheat temperature increases, but approaches the inherent selectivity predicted by the model at high feed preheat temperatures.  In other words, at low preheat temperatures the commercial unit operation is non-optimum but that at higher feed temperatures it begins to resemble the more efficient pilot plant operation.

Operating conditions and yields for the three surveys are reported in Table 1.

## TABLE 1

### Oil Charge, B/D

| | | | |
|---|---|---|---|
| Virgin Gas Oil | 75,343 | 69,910 | 68,484 |
| Coker Gas Oil | 15,102 | 18,389 | 18,124 |
| Total | 90,445 | 88,308 | 86,608 |

### Recycle, B/D

| | | | |
|---|---|---|---|
| Slurry Settler Bottoms | 0 | 1173 | 1639 |
| Combined Feed Ratio | 1.0 | 1.016 | 1.020 |

### Operating Conditions

Temperatures, °F.

| | | | |
|---|---|---|---|
| Riser Top | 965 | 959 | 960 |
| Combined Feed | 265 | 314 | 514 |
| Regen. Dense Bed Outlet | 1274 | 1263 | 1231 |
| Pressure, psig Reactor Top | 32.1 | 31.6 | 30.9 |
| Catalyst Activity, FAI (clean burned) | 53.8 | 58.2 | 58.3 |
| Carbon on Spent Catalyst, wt.% | 0.844 | 0.823 | 1.047 |
| Carbon on Regen. Catalyst, wt.% | 0.108 | 0.219 | 0.327 |
| Catalyst Circulation, TPM | 80.5 | 67.1 | 62.6 |
| Cat/Oil (wt/wt) | 8.0 | 6.8 | 6.4 |

### Yields, % on Fresh Feed

| | Vol. | Vol. | Vol. |
|---|---|---|---|
| Conversion, | 69.4 | 72.3 | 68.1 |
| Clarified Slurry Oil | 8.6 | 3.8 | 5.7 |
| Light Cycle Oil | 22.0 | 23.9 | 26.2 |
| $C_5^+$ Gasoline | 51.9 | 56.0 | 54.3 |
| Total $C_4$'s | 12.7 | 13.2 | 11.6 |
| Total $C_3$'s | 9.1 | 9.0 | 7.6 |
| Dry Gas + $H_2S$ | 3.7(wt) | 3.5(wt) | 2.9(wt) |
| Coke | 7.0(wt) | 6.3(wt) | 5.3(wt) |
| Light Cycle Oil 90% Point, °F. | 649 | 654 | 634 |

Table 1 shows the actual reactor effluent
yields for the three surveys. Before the surveys can be
compared to determine the effect of feed preheat, yields
had to be adjusted to the same feedstock, catalyst, and
operating conditions, (except for preheat temperature).
Election was made to adjust the two extreme preheat
cases to the middle preheat case. Once the three
surveys were adjusted to the same basis, any remaining
differences in yields between them could be attributed
to the changes in feed preheat temperature. These final
adjusted survey yields are shown in Table 2.

## TABLE 2

| Yields, % on Fresh Feed | Adjusted 265°F. Survey Vol. | Survey at 374°F. Vol. | Adjusted 514°F. Survey Vol. |
|---|---|---|---|
| Conversion | 70.8 | 72.3 | 69.2 |
| Clarified Slurry Oil (1) | 7.0 | 3.8 | 5.4 |
| Light Cycle Oil (1) | 22.2 | 23.9 | 25.4 |
| $C_5^+$ Gasoline | 52.3 | 56.0 | 55.5 |
| Total $C_4$'s | 13.6 | 13.2 | 12.1 |
| Total $C_3$'s | 9.2 | 9.0 | 7.8 |
| Dry Gas + $H_2S$ | 3.5(wt) | 3.5(wt) | 3.0(wt) |
| Coke | 7.3(wt) | 6.3(wt) | 5.2(wt) |

A comparison of the adjusted survey results shows that when feed preheat on the Unit is reduced from 514°F. to 374°F. conversion increase gradually due to an increase in catalyst-to-oil ratio required to heat balance the unit. However, contrary to expectation, when feed preheat is further reduced to 265°F. conversion drops sharply instead of continuing to increase, despite a further increase in catalyst-to-oil ratio. Gasoline yield, on the other hand, increases only slightly when feed preheat temperaure is lowered from 514°F. to 374°F. , then drops even more sharply then conversion between 374°F. and 265°F. For the same temperature change, conversion dropped 1.5% which is much less than the 3.7% gasoline loss, showing a large loss in selectivity.

Maximum gasoline selectivity is obtained at the highest feed preheat temperature; it decreases gradually between 514°F. and 374°F. and then decreases sharply between 374°F. and 265°F.

Although, at this time no offer can be made of a fundamental explanation of why gasoline selectivity increases with increasing feed preheat temperaure, it is felt this is related to changes in the heat and mass transfer and kinetic processes, which occur at the bottom of the riser, as feed preheat temperature is increased. Temperature traverses of the riser, obtained at the Unit during the surveys at the three different preheat levels, provided some evidence that such changes do indeed take place as feed preheat is increased. For example, whereas the calculated mix temperature of the regenerated catalyst and oil feed are about the same for the three surveys, the actual mix temperature observed in the temperature traverses increases as feed preheat temperaure is reduced. The deviation between the actual and calculated mix temperatures increases from 0°F. at the high feed preheat case (514°F.) to 85°F. at the low feed preheat case.

At the low feed preheat temperature the deviation between actual and calculated mix temperature was actually greater than the deviation observed at a different commercial FCC unit earlier (53°F.), which unit had a single nozzle. This implies that as feed preheat temperature is reduced the multi-nozzle feed injection system is behaving like a single nozzle system--at least with respect to whatever phenomenon is causing this mix temperature difference

Preheat temperatures according to the invention will generally be above 475°F, preferably about 500°F. or higher, up to about 750-800°F.

0000433

CLAIMS:

1. A process for fluid catalytic cracking of hydrocarbon feed comprising dispersing hot regenerated catalyst in a rising stream of such feed injected by a plurality of nozzles within a reactor wherein the endothermic heat of cracking and heat to bring said feed to cracking temperatures is supplied by sensible heat of the hot regenerated catalyst, separating catalyst from the products of said cracking, regenerating the so separated catalyst by burning carbonaceous deposits therefrom with air whereby the catalyst is raised in temperature to provide the hot regenerated catalyst aforesaid and controlling the amount of said hot regenerated catalyst so dispersed to maintain a predetermined temperature at a predetermined point in said reactor, said feed being preheated to a temperature greater than 475°F. before dispersing therein said hot regenerated catalyst.

2. A process according, to claim 1 wherein said feed is preheated to a temperature greater than about 500°F.

3. A process according to claim 1 or claim 2 wherein said nozzles comprise a total of seven arranged as six nozzles uniformly spaced about one central nozzle.

FIG.1    1/4

0000433

FIG.2

2/4

0000433

3/4

0000433

FIG. 3

FIG. 4

## FIG.5

### EFFECT OF NUMBER OF NOZZLES OF MIXING DEVICE ON AVERAGE CATALYST CONCENTRATION AT LEVEL 1

| Category | Citation of document with indication, where appropriate, of relevant passages | Relevant to claim |
|---|---|---|
| D | <u>US – A – 3 246 960</u> (SHARP a.o.) <br> \* Figures 2,3; column 3, lines 65–67; claims 1–7 \* | 1 |
| | <u>FR – A – 2 322 195</u> (MOBIL OIL) <br> \* Figures 1 and 3; claims 1,8; column 4, lines 16–26 \* | 1,2 |
| | <u>US – A – 3 769 203</u> (LEE a.o.) <br> 30–10–1973) <br> \* Figure 1; claims 1,2,13,21,35, 45; column 5, lines 60–71 \* | 1,2 |
| | <u>US – A – 3 513 087</u> (J.SMITH) <br> \* Figure 1; claims 1,2,3; column 2, lines 44–51 \* | 1,2 |

**CLASSIFICATION OF THE APPLICATION (Int. Cl.⁴)**

C 10 G 11/18

**TECHNICAL FIELDS SEARCHED (Int.Cl.³)**

C 10 G 11/18
B 01 J 8/26

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10–10–1978 | MICHIELS |